# EUROPÄISCHE PATENTANMELDUNG

(11) **EP 0 733 595 A1**
(43) Veröffentlichungstag der Anmeldung: **25.09.1996**
(21) Anmeldenummer: 96890053.0
(22) Anmeldetag: 21.03.1996
(51) Int. Cl.: C02F 3/06, C02F 3/12

(54) **Verfahren zur mehrstufigen Abwasserreinigung und Kläranlage**

(30) Priorität: 21.03.1995 AT 154/95
(71) Anmelder: Becker, Wolfgang, Dr. Dipl.-Ing., 6060 Absam, Tirol (AT)
(72) Erfinder: Becker, Wolfgang, Dr. Dipl.-Ing., 6060 Absam, Tirol (AT)
(74) Vertreter: Matschnig, Franz, Dipl.-Ing.

(57) **Zusammenfassung**

Ein Verfahren zur mehrstufigen Abwasserreinigung, bei welchem vorgereinigtes Abwasser in zumindest einer Biokammer unter Benutzung eines ständig getauchten, von unten belüfteten Festbettkörpers biologisch behandelt und weiters in zumindest einer Nachklärkammer nachgeklärt wird, wobei das Abwasser in der Biokammer (4a, b) zusätzlich einer Belebtschlammbehandlung unterworfen und Belebtschlamm als Rücklaufschlamm ständig aus der Nachklärkammer (13) in die Biokammer rückgeführt wird. Eine Kläranlage zur mehrstufigen Abwasserreinigung mit zumindest einer Biokammer (4a, b), in welcher ein von unten belüfteter Festbettkörper (5a, b) angeordnet ist und mit zumindest einer Nachklärkammer (13) weist zwischen der Nachklärkammer (13) und der Biokammer (4b) eine Rücklaufleitung (17) für Rücklaufschlamm (18) als Belebtschlamm sowie eine zugehörige Rücklaufschlamm-Fördereinrichtung (20a) auf.

## Beschreibung

Die Erfindung bezieht sich auf ein Verfahren zur mehrstufigen Abwasserreinigung, bei welchem vorgereinigtes Abwasser in zumindest einer Biokammer unter Benutzung eines ständig getauchten, von unten belüfteten Festbettkörpers biologisch behandelt und weiters in zumindest einer Nachklärkammer nachgeklärt wird. Ebenso bezieht sich die Erfindung auf eine Kläranlage zur mehrstufigen Abwasserreinigung mit zumindest einer Biokammer, in welcher ein von unten belüfteter Festbettkörper angeordnet ist, und mit zumindest einer Nachklärkammer.

Aus der AT-B-396 682 geht eine Kläranlage hervor, die aus einer großen Anzahl von Kammern besteht, welche wahlweise, z.B. über Schieber oder Rohrleitungen miteinander auf unterschiedlichste Art in Verbindung gebracht werden können, sodaß verschiedene Verfahren zur Abwasserklärung durchführbar sind, sofern die Kammern entsprechend adaptiert und geeignete Verbindungen hergestellt sind. Wie dem Dokument entnehmbar, ist die Anlage im Belebtschlammverfahren betreibbar oder aber in Verbindung mit Festbettkörpern. Auch kann mit aerobem oder anaerobem Schlamm gearbeitet werden.

Diese bekannte Kläranlage mag zwar theoretisch flexibel und für verschiedene Verfahren geeignet sein, doch ist naturgemäß der Raumbedarf der Anlage sehr groß, da auf eine bestimmte Aufgabenstellung nicht Rücksicht genommen wird, sondern die universelle Verwendbarkeit im Vordergrund steht. Insbesondere als Kleinkläranlage wird diese bekannte Kläranlage nicht einsetzbar sein.

Die AT-B-396 684 hat ein zweistufiges Belebtschlammverfahren zum Gegenstand, wobei eine gegenseitige Schlammrückführung die Ausbildung von Mischbiozönosen begünstigt, sodaß in beiden Stufen durch Nitrifikation und Denitrifikation Stickstoffverbindungen entfernt werden können. Der Beschreibung ist entnehmbar, daß das dargelegte Verfahren in erster Linie für relativ große Anlagen (z.B. 6000 EGW) geeignet ist. Die Verwendung von Belebtschlamm zusammen mit Festbettkörpern ist nicht geoffenbart und die in der Einleitung genannten Sekundärdokumente betreffen sämtliche die Entfernung von Stickstoffverbindungen aus Abwasser.

Aus der DE 31 31 989 A1 ist eine Kläranlage bekannt geworden, die zumindest zwei Behandlungszonen und ein Nachklärbecken aufiveist, wobei Belebtschlamm aus dem Nachklärbecken der ersten bzw. mehreren ersten Behandlungszone(n) zugeführt wird. Das Abwasser gelangt aus der ersten Behandlungszone in die zweite Behandlungszone, in welcher Materialteilchen, z.B. aus Polymethanschaum mit durchschnittlich 1 cm Durchmesser schwimmen (sog. ,,floating bed"). Die zweite Behandlungszone wird ebenso wie die erste bzw. die ersten mit Luft begast. Dieses Dokument zeigt keine Biokammer mit ständig getauchten Festbettkörpern. Die Verwendung von schwimmenden Materialteilchen ist nachteilig, da es erforderlich ist, diese Teilchen zurückzuhalten bzw. wieder von dem ausfließenden Wasser abzutrennen. Hier bedarf es oft eines eigenen Abtrennens, wie z.B. die EP 0 549 443 A1 zeigt. Diese ist eine der oben geschriebenen Anlage ähnliche Kläranlage mit durch eingeblasene Luft in Turbulenz gebrachten Materialteilchen einer Korngröße von 1 bis 5 mm ist auch der EP 0 549 443 A1 zu entnehmen.

Die AT 388 368 B betrifft ein besonders ausgestaltetes druckluftbetätigtes Verschlußorgan bei dem Belebungsbecken einer Kläranlage. Von zwei dargestellten und beschriebenen Ausführungsformen weist die erste Ausführungsform ein Vorklärbecken und ein Belebungsbecken auf. Das Belebungsbecken kann auch ein Festbett enthalten und bei zuviel Schlammanfall kann Belebtschlamm aus dem Belebungsbecken in das Vorklärbecken gebracht werden. Die zweite Ausführungsform betrifft eine Kläranlage, die gegebenenfalls ein Vorklärbecken, dann ein Belebungsbecken und schließlich ein Nachklärbecken besitzt. Bei dieser Anlage wird Belebtschlamm, der sich im Nachklärbecken absetzt über eine Leitung wieder in das Belebungsbekken geführt. Es ist jedoch weder dargestellt noch beschrieben, daß bei dieser Ausführungsform in dem Belebungsbecken ein Festkörper vorgesehen ist, da ein Vorurteil gegen die Verwendung eines Festkörpers in einer Biokammer bei gleichzeitiger Belebtschlammrückführung in die Biokammer bestand. Man war nämlich der Auffassung, daß die auf dem Festkörper angesiedelten Mikroorganismen, die sog. sessile Biomasse, in einem schädlichen Konkurrenzverhältnis zu frei schwimmendem Belebtschlamm steht.

Eine Aufgabe der Erfindung liegt in der Schaffung einer Kläranlage, die auch für kleineren Abwasseranfall geeignet ist, z.B. für einzeln stehende Almhütten, Berghotels, etc., wobei die Anlage sowohl bei schwacher, mittlerer als auch starker Belastung problemlos arbeiten soll. Dabei sollen die Anforderungen an die Wartung minimal sein. Die Anlage soll mit herkömmlichen Teilen aufgebaut und nach Möglichkeit leicht transportiert werden können.

Zur Lösung der Aufgabe sieht die Erfindung ausgehend von einem Verfahren der eingangs angegebenen Art vor, daß das Abwasser in der Biokammer zusätzlich einer Belebtschlammbehandlung unterworfen wird, wobei Belebtschlamm als Rücklaufschlamm ständig aus der Nachklärkammer in die Biokammer rückgeführt wird.

Auch wird die Aufgabe mit einer Kläranlage der eingangs genannten Art gelöst, bei welcher erfindungsgemäß eine Rücklaufleitung für Rücklaufschlamm als Belebtschlamm zwischen dem Nachklärbecken und der Biokammer sowie eine zugehörige Rücklaufschlamm-Fördereinrichtung vorgesehen sind.

Weitere Merkmale der Erfindung sind in den abhängigen Ansprüchen gekennzeichnet.

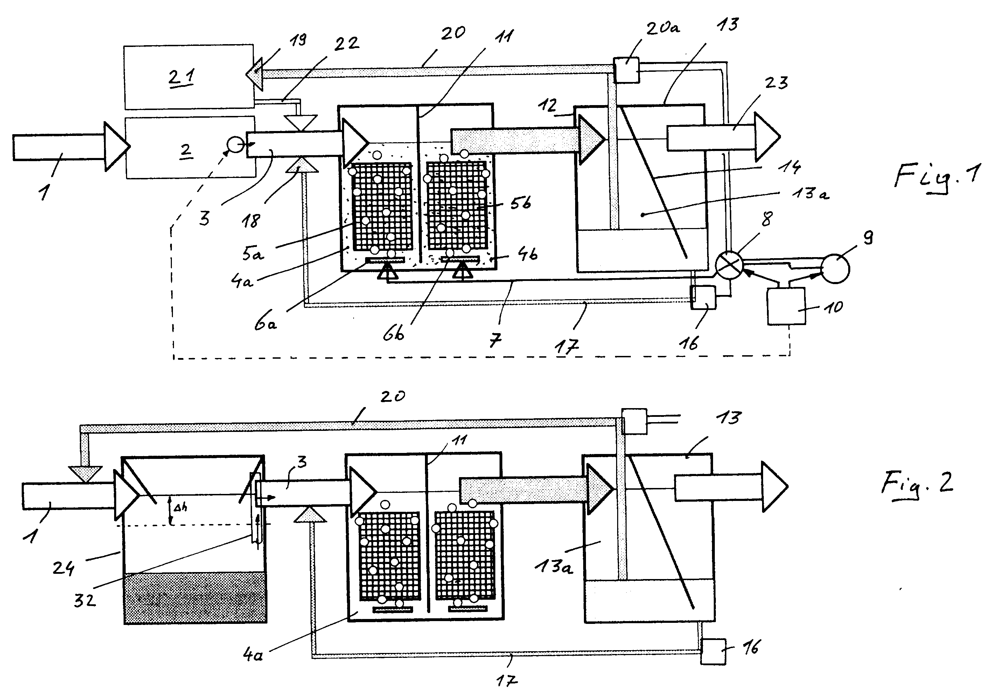

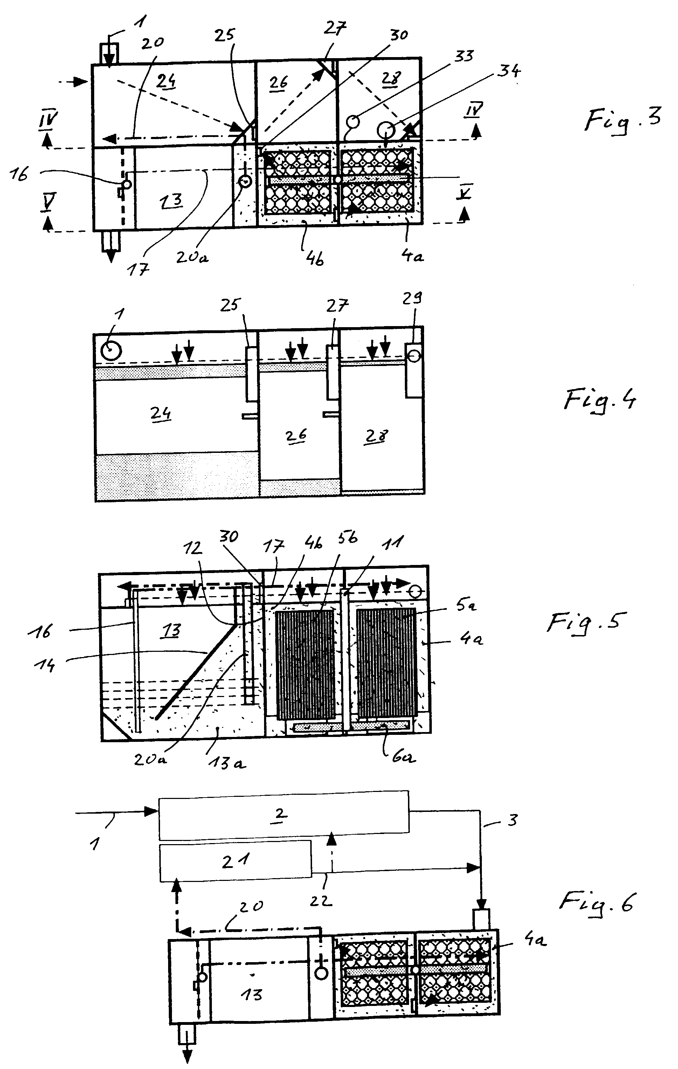

Die Erfindung samt anderer Vorteile ist im folgenden anhand einer beispielsweisen Ausführungsform erläutert, die in der Zeichnung dargestellt ist. In dieser zeigen Fig. 1 das Verfahrensschema nach der Erfindung mit externer Vorklärung, Fig. 2 ein entsprechendes Schema mit integrierter Vorklärung, Fig. 3 eine Kläranlage nach der Erfindung mit integrierter Vorklärung in Draufsicht, Fig. 4 einen Schnitt nach der Linie IV-IV der Fig. 3, Fig. 5 einen Schnitt nach der Linie V-V der Fig. 3 und Fig. 6 eine Kläranlage nach der Erfindung mit externer Vorklärung in Draufsicht.

Gemäß Fig 1 wird Rohabwasser 1 einer Vorabscheidekammer 2 zugeführt, in welcher eine mechanische Vorreinigung, vor allem durch Absetzen fester Abwasserbestandteile erfolgt. Von der Vorabscheidekammer 2 gelangt mechanisch gereinigtes, d.h. vorgereinigtes Abwasser 3 in zwei hintereinandergeschaltete Biokammern 4a, 4b. Jede dieser Biokammern 4a, 4b enthält einen Tauchkörper 5a, 5b. Solche Tauchkörper, auch Festbettkörper genannt, sind dem Fachmann bekannt. Sie bestehen üblicherweise aus Kunststoff und weisen eine große Oberfläche auf, die sich im Betrieb mit einem biologisch aktiven Bakterienfilm überzieht. Jeder Kammer 4a, 4b ist weiters ein Belüfter 6a, 6b zugeordnet, der über eine Luftleitung 7 und über eine gesteuerte Ventileinrichtung 8 von einer Drucklufiquelle 9, z.B. einem Kompressor, mit Druckluft versorgt wird. Die Ventileinrichtung 8 bzw. die Druckluftquelle 9 sind im allgemeinen von einer elektronischen Steuerung 10 gesteuert. Aus den Belüftern 6a, b aufsteigende, feinverteilte Luft versorgt die Tauchkörper 5a, b mit dem für die biologischen Reinigungsvorgänge erforderlichen Luftsauerstoff. Die beiden Biokammern 4a, 4b sind bei diesem Beispiel durch eine unterströmte Tauchwand 11 voneinander getrennt. Auch die Zuführung von vorgereinigtem Wasser in die erste Biokammer 4a kann aus mit Hilfe einer gesteuerten Pumpe 31 erfolgen, wie in Fig. 1 strichliert als Option angedeutet ist.

Aus der Biokammer 4b gelangt ein Fluß 12 aus biologisch gereinigtem Abwasser und Schlammanteilen z.B. über eine überströmte Trennwand 12 in eine Nachklärkammer 13. Diese Kammer 13 besitzt einen Expansionsraum 13a, der von dem Rest der Nachklärkammer durch ein nach oben und in Richtung des Einflusses verlaufendes, unterströmtes Schrägblech 14 getrennt ist.

In der Nachklärkammer 13 setzt sich eine Schlammschicht 15 ab. Aus dieser Schlammschicht 15 wird mit Hilfe einer hier nur schematisch angedeuteten Fördereinrichtung 16 über eine Rücklaufleitung 17 biologisch aktiver Rücklaufschlamm 18 den Biokammern 4a, b als Belebtschlamm zugeführt. Die Anlage arbeitet somit nach dein Belebtschlammverfahren kombiniert mit dem Biofilmverfahren unter Verwendung belüfteter Festkörper.

Den bekannten Vorteilen des Biofilmverfahrens steht der Nachteil gegenüber, daß es verhältnismäßig lange dauert, bis eine zunächst nicht vorhandene oder aus irgendwelchen Gründen zerstörte Biomasse (Biofilm) auf dem Festkörper aufwächst. Dieser Nachteil wird durch die Kombination mit dem Belebtschlammverfahren ausgeglichen, da durch einmalige Zugabe von Impfschlamm ein äußerst rascher Aufbau der gewünschten Reinigungsleistung möglich ist.

Die Fördereinrichtung 16 kann z.B. als Druckluftheber ausgebildet sein und Rücklaufschlamm 18 kontinuierlich oder quasi kontinuierlich, z.B. 3 bis 4-mal pro Stunde, rückführen. Eine Zeitsteuerung durch die elektronische Steuerung 10 über die Ventileinrichtung 8 ist dabei empfehlenswert. Ebenso kann die Pumpe 31 ein Druckluftheber sein.

Es versteht sich, daß der Fluß 12 zwischen der Biokammer 4b und der Nachklärkammer 13 im biologisch gereinigten Abwasser Biofilmschlamm und Belebtschlamm enthält. Eine nicht gezeigte Spülung für die Tauchkörper 5a, b der Biokammern 4a, b kann vorgesehen und nach Bedarf oder periodisch betrieben werden. In der Nachklärkammer 13 wird ein bestimmter minimaler Schlammpegel eingehalten. Überschußschlamm 19 wird über eine Abführleitung 20 mittels einer Fördereinrichtung 20a, z.B. eines Drucklufthebers in eine Schlammeindickkammer 21 abgeführt, aus welcher über eine Leitung 22 Schlammüberstandswasser zu den Biokammern 4a, b gebracht werden kann. Das biologisch gereinigte Abwasser 23 verläßt die Nachklärkammer 13. Das Abführen des Überschußschlamms kann gleichfalls zeitgesteuert erfolgen, z.B. 1- bis 2-mal täglich oder während der Nachtstunden.

Die Variante nach Fig. 2 unterscheidet sich von der zuvor beschriebenen lediglich dadurch, daß sie eine integrierte, d.h. in der Anlage als solcher enthaltene Vorabscheide- und Schlammspeicherkammer 24 aufweist. In diesem Fall wird der Überschußschlamm aus der Nachklärkammer 13 über die Abführleitung 20 in die Kammer 24 gerührt, die somit einerseits der mechanischen Vorreinigung des Rohabwassers 1 und andererseits der Schlammeindickung und -speicherung dient. Eine Leitung 22 zum Abführen von Schlammüberstandswasser gemäß Fig. 1 entfällt natürlich. Zusätzlich kann eine periodische Beschickung mit mechanisch gereinigtem Abwasser erfolgen, was durch eine Leitung 32 in Fig. 2 angedeutet ist. Mit Δ h ist der variable Flüssigkeitspegel in der Kammer 24 bezeichnet. Die der Fig. 1 völlig entsprechenden anderen Anlagenteile sind nicht näher bezeichnet oder beschrieben.

Eine nähere Beschreibung einer als kompakte Kleinkläranlage ausgeführten Anlage nach der Erfindung wird im Zusammenhang mit den Fig. 3 bis 5 gegeben, wobei die Kenntnis der vorangegangenen Beschreibung vorausgesetzt und weitgehend gleiche Bezugszeichen verwendet werden.

Die Anlage nach Fig. 3 bis 5 besteht aus einem quaderförmigen Kunststoffbecken, das durch Zwischenwände in Kammern entsprechend Fig. 2 geteilt ist. Rohabwasser 1 strömt in eine kombinierte Vorabscheide- und Schlammspeicherkammer 24 und gelangt von hier kontinuierlich oder periodisch, je nach Wasseranfall, mit Hilfe einer geeigneten Fördereinrichtung, bzw. bei Gefälleförderung unter Verwendung gegebenenfalls einer gesteuerten Ventileinrichtung über einen Überlauf 25 in eine erste Feinentschlammkammer 26 und sodann über einen weiteren Überlauf 27 in eine zweite Feinentschlammkammer 28. Von dieser Kammer gelangt vorgereinigtes Abwasser über einen Überlauf 29 in eine erste Biokammer 4a mit einem Tauchkörper 5a und einer Belüftung 6a, unterströmt die Tauchwand 11 (vgl. Fig. 1) um in die zweite Biokammer 4b zu gelangen und verläßt diese über einen Überlauf 30, der z.B. als V-Wehr ausgebildet ist. Das gereinigte Abwasser mit Schlammanteilen gelangt nun in den Expansionsraum 13a der Nachklärkammer 13. Wahlweise können noch ein Schwimmschalter 33 für die Lufteintragungskontrolle bzw. eine Förderpumpe 34 für eine periodische Beschickung der ersten Biokammer 4a vorgesehen sein.

Die Rücklaufleitung 17 für den Rücklaufschlamm und die Abführleitung 20 für den Überschußschlamm sind in Fig. 3 bzw. 5 strichliert eingezeichnet, ein Druckluftheber 16 für den Rücklaufschlamm und ein Druckluftheber 20a sind in den Fig. 3 und 5 angedeutet. Diese Heber 16, 20a werden in der anhand der Fig. 1 beschriebenen Weise mit Druckluft versorgt, doch können auch alle anderen, auf diesem Fachgebiet üblichen Fördereinrichtungen 16, 20a, z.B. Kreisel pumpen, Anwendung finden. Der Überschußschlamm kann entweder zu einem Schlammeindickbecken abgeführt oder in die Kammer 24 eingebracht werden, wie dies anhand der Fig. 2 erläutert wurde und bei dieser Ausführung auch vorgesehen ist.

Die Anlage nach Fig. 6 verwendet eine getrennte Schlammeindickkammer 21, bzw. ein entsprechendes Becken. Das Rohabwasser 1 gelangt in eine ebenfalls getrennte Vorabscheidekammer 2 bzw. ein Becken, gegebenenfalls natürlich in mehrere, hintereinandergeschaltete Vorabscheider, und als vorgereinigtes Abwasser 3 sodann in die Biokammer 4a. Über eine Leitung 22 kann Schlammüberstandswasser aus der Kammer 21 entweder in die Vorabscheidekammer oder unmittelbar in die erste Biokammer 4a geführt werden. Überschußschlamm gelangt aus der Nachklärkammer 13 (vgl. Fig. 3) über die Abführleitung 20 in die oben erwähnte Schlammeindickkammer. Im übrigen gleichen Funktion und Aufbau der Anlage nach den Fig. 3 und 5.

Eine Kläranlage nach der Erfindung kann so leicht und kompakt gebaut werden, daß sie auch flugtransportfähig ist und somit problemlos in entlegenen Gebirgsgegenden einsetzbar ist. Wenngleich vorstehend eine Quaderform der Anlage und der Kammern beschrieben wurde, sollte es klar sein, daß die Anlage und/oder die Kammern z.B. auch zylindrisch oder wabenförmig sein können. Auch ist die Verwendung anderer Materialien, z.B. Leichtmetall, möglich, welche den Kunststoff ganz oder teilweise ersetzen können. Die Anlage ist wenig störanfällig, da sie kaum bewegte Teile enthält. Im einfachsten Fall muß lediglich ein Luftverdichter vorgesehen sein, der, ebenso wie die elektronische Steuerung entweder von einem üblichen Stromnetz (220 V/380 V) versorgt werden kann, oder von einem lokalen 12 Volt oder 24 Volt-Netz, das auch von Fotozellen gespeist sein kann. Die Steuerung ist als solche sehr einfach, da z.B. nicht mehr als 3 Luftventile zu steuern sind. Der Höhenverlust in der Anlage kann äußerst gering, z.B. 15cm, gehalten werden. Abhängig von der Art und Menge des anfallenden Abwassers sowie von den Anforderungen an das gereinigte Abwasser kann die Zugabe von Fällmitteln vorgesehen sein. Auch die Fällmittelzugabe kann automatisch gesteuert werden.

## Patentansprüche

1. Verfahren zur mehrstufigen Abwasserreinigung, bei welchem vorgereinigtes Abwasser in zumindest einer Biokammer unter Benutzung eines ständig getauchten, von unten belüfteten Festbettkörpers biologisch behandelt und weiters in zumindest einer Nachklärkammer nachgeklärt wird,
**dadurch gekennzeichnet, daß**
das Abwasser in der Biokammer zusätzlich einer Belebtschlammbehandlung unterworfen wird, wobei Belebtschlamm als Rücklaufschlamm ständig aus der Nachklärkammer in die Biokammer rückgeführt wird.

2. Verfahren nach Anspruch 1, **dadurch gekennzeichnet, daß** der Rücklaufschlamm kontinuierlich rückgeführt wird.

3. Verfahren nach Anspruch 1, **dadurch gekennzeichnet, daß** der Rücklaufschlamm periodisch, z.B. 3 bis 4-mal/Stunde rückgeführt wird.

4. Verfahren nach einem der Ansprüche 1 bis 3, **dadurch gekennzeichnet, daß** Überschußschlamm aus der Nachklärkammer in eine Schlammeindickkammer abgeführt wird.

5. Verfahren nach Anspruch 4, **dadurch gekennzeichnet, daß** Schlammüberstandswasser aus der Schlammeindickkammer zu der Biokammer rückgeführt wird.

6. Verfahren nach einem der Ansprüche 1 bis 3, **dadurch gekennzeichnet, daß** Überschußschlamm aus der Nachklärkammer in eine kombinierte Vorabscheide- und Schlammspeicherkammer abgeführt wird.

7. Verfahren nach einem der Ansprüche 4 bis 6, **dadurch gekennzeichnet, daß** der Überschußschlamm in Abhängigkeit von dem Schlammanfall mehrmals, z.B. 1 bis 2-mal täglich abgeführt wird.

8. Verfahren nach einem der Ansprüche 1 bis 7, **dadurch gekennzeichnet, daß** der biologische Behandlungsschritt zwei- oder mehrstufig, in zumindest zwei hintereinandergeschalteten Biokammern durchgeführt wird.

9. Verfahren nach einem der Ansprüche 1 bis 8, **dadurch gekennzeichnet, daß** das Rückführen des Rücklaufschlamms in die Biokammer durch einen Druckluftheber mittels Druckluft erfolgt.

10. Verfahren nach einem der Ansprüche 4 bis 9, **dadurch gekennzeichnet, daß** das Abführen des Überschußschlammes durch einen Druckluftheber mittels Druckluft erfolgt.

11. Verfahren nach Anspruch 9 oder 10, **dadurch gekennzeichnet, daß** Druckluft einer Druckluftquelle über ein zeitgesteuertes Ventil der Biokammer, dem Heber für Rücklaufschlamm und dem Heber für Überschußschlamm zugeführt wird.

12. Kläranlage zur mehrstufigen Abwasserreinigung mit zumindest einer Biokammer (4a, b), in welcher ein von unten belüfteter Festbettkörper (5a, b) angeordnet ist und mit zumindest einer Nachklärkammer (13),
**dadurch gekennzeichnet, daß**
eine Rücklaufleitung (17) für Rücklaufschlamm (18) als Belebtschlamm zwischen der Nachklärkammer (13) und der Biokammer (4b) bzw. einer dieser vorgeschalteten Kammern (24) sowie eine zugehörige Rücklaufschlamm-Fördereinrichtung (20a) vorgesehen sind.

13. Kläranlage nach Anspruch 12, **dadurch gekennzeichnet, daß** die Rücklaufschlamm-Fördereinrichtung als Druckluftheber (16) ausgebildet ist.

14. Kläranlage nach Anspruch 12 oder 13, **dadurch gekennzeichnet, daß** zumindest zwei hintereinander geschaltete Biokammern (4a, 4b) vorgesehen sind.

15. Kläranlage nach Anspruch 14, **dadurch gekennzeichnet, daß** je zwei Biokammern (4a, 4b) durch eine unterströmte Tauchwand (11) voneinander getrennt sind.

16. Kläranlage nach einem der Ansprüche 12 bis 15, **dadurch gekennzeichnet, daß** eine Abführleitung (20) für Überschußschlamm (19) zwischen der Nachklärkammer (13) und einer Schlammeindickkammer (21) vorgesehen ist.

17. Kläranlage nach Anspruch 16, **dadurch gekennzeichnet, daß** der Abführleitung (20) ein Druckluftheber (20a) zugeordnet ist.

18. Kläranlage nach einem der Ansprüche 13 bis 17, **dadurch gekennzeichnet, daß** eine insbesondere elektrisch betriebene Druckluftquelle (9) vorgesehen ist, die mit der Belüftung (6a, 6b) der Biokammer (4a, 4b) sowie mit dem Druckluftheber (16) für den Rücklaufschlamm verbunden ist.

19. Kläranlage nach Anspruch 18, **dadurch gekennzeichnet, daß** zwischen die Druckluftquelle (9) und den Druckluftheber (16) ein von einer elektronischen Steuereinheit (10) gesteuertes Magnetventil (8) geschaltet ist.

20. Kläranlage nach Anspruch 18, **dadurch gekennzeichnet, daß** zwischen Druckluftquelle (9) und den Druckluftheber (20a) für den Überschußschlamm ein von der elektronischen Steuereinheit (10) gesteuertes Magnetventil (8) geschaltet ist.

21. Kläranlage nach Anspruch 19 und 20, **dadurch gekennzeichnet, daß** für die Druckluftheber (16, 20a) des Rücklauf- und des Überschußschlamms und für den Belüfter (6a, b) der Biokammer (4a, b) ein von der Steuereinheit (10) gesteuertes Mehrwegeventil (8) vorgesehen ist.

22. Kläranlage nach einem der Ansprüche 12 bis 21, **dadurch gekennzeichnet, daß** zwischen der Biokammer (4b) und der Nachklärkammer (13) eine überströmte Trennwand (12) vorgesehen ist; auf welche in der Nachklärkammer (13) ein Expansionsraum (13a) folgt, der von dem Rest der Nachklärkammer durch ein nach oben und in Richtung der Trennwand verlaufendes, unterströmtes Schrägblech (14) getrennt ist.

23. Kläranlage nach einem der Ansprüche 12 bis 22, **dadurch gekennzeichnet, daß** sie zumindest eine Vorabscheidekammer (2, 24) aufweist.

24. Kläranlage nach Anspruch 23, **dadurch gekennzeichnet, daß** eine Abführleitung für Überschußschlamm zwischen der Nachklärkammer (13) und der Vorabscheidekammer (24) vorgesehen ist.
